(19) Europäisches Patentamt
European Patent Office
Office européen des brevets

(11) **EP 3 187 644 B1**

(12) **EUROPEAN PATENT SPECIFICATION**

(45) Date of publication and mention of the grant of the patent:
**21.10.2020 Bulletin 2020/43**

(51) Int Cl.:
***D06F 34/22*** *(2020.01)*       ***D06F 33/36*** *(2020.01)*
*D06F 103/20* *(2020.01)*       *D06F 105/58* *(2020.01)*

(21) Application number: **14900823.7**

(86) International application number:
**PCT/CN2014/091147**

(22) Date of filing: **14.11.2014**

(87) International publication number:
**WO 2016/029560 (03.03.2016 Gazette 2016/09)**

(54) **WASHING MACHINE HAVING REMINDING FUNCTION FOR PREVENTING CLOTHING FROM FADING, AND METHOD**

WASCHMASCHINE MIT ERINNERUNGSFUNKTION ZUR VERHINDERUNG DES AUSBLEICHENS VON KLEIDERN SOWIE VERFAHREN

MACHINE À LAVER AYANT UNE FONCTION DE RAPPEL POUR EMPÊCHER LES VÊTEMENTS DE SE DÉCOLORER, ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.08.2014 CN 201410438739**

(43) Date of publication of application:
**05.07.2017 Bulletin 2017/27**

(73) Proprietor: **Qingdao Haier Washing Machine Co., Ltd.**
**Shandong 266101 (CN)**

(72) Inventors:
• **XU, Sheng**
**Qingdao**
**Shandong 266101 (CN)**
• **YIN, Junming**
**Qingdao**
**Shandong 266101 (CN)**

• **CHEN, Yuling**
**Qingdao**
**Shandong 266101 (CN)**
• **SONG, Huacheng**
**Qingdao**
**Shandong 266101 (CN)**

(74) Representative: **Ziebig & Hengelhaupt Patent- und Rechtsanwaltskanzlei PartG mbB**
**Leipziger Straße 49**
**10117 Berlin (DE)**

(56) References cited:
CN-A- 102 505 414     CN-A- 104 195 787
FR-A1- 2 898 609     GB-B- 2 078 946
JP-A- H03 224 595     KR-A- 20050 066 439
KR-A- 20050 066 439     US-A1- 2006 007 444
US-A1- 2006 007 444     US-A1- 2007 299 545

**Description**

**FIELD OF THE INVENTION**

The present disclosure relates to a field of washing machine, particularly to a washing machine having reminding function for preventing clothing from fading, and relates to a reminding method of a washing machine for preventing clothing from fading.

**BACKGROUND OF THE INVENTION**

With the development of sensor technology, more and more sensors are used in the washing machine, so that washing machines are more and more intelligent. For example, the existing washing machine is gradually equipped with turbidity sensor, temperature sensor, washing machine weighing module and so on. These sensors make the washing machine have a certain interaction to the washing environment, so the washing machine has taken one step to intelligent.

However, the existing washing machine can't identify the color of clothes. When the color clothes being put into the washing machine, the color fading phenomenon will occur as the washing process goes. If there is no corresponding detection device to detect it, the fading phenomenon will continue to occur, resulting in increased damage to clothes, and ultimately causing irreparable damage to clothes. This not only causes users to lose a beloved clothing, more likely the users will blame the washing machine and have a psychological conflict to the washing machines of certain brand.

In order to achieve early warning and detecting of the color fading phenomenon of clothing in the existing washing machine, the existing literature proposed a number of improvements. For example, Chinese patent application No. CN200780025027.4 discloses a washing machine, which is installed a color sensor at the clothes disposal of the washing tub. During the delivery of the laundry, the color sensor detects the color of the laundry, and the controller determines the washing parameters based on the color data of the laundry. The washing machine then washes the laundry according to the determined washing parameters.

But the scheme described above only separates washing based on the color of the clothes, thus ensures that the color fading phenomenon will not occur between different color clothes, and the contamination between clothes will not occur. By adopting the scheme described above, the washing machine sends the wrong fading alarm when different color and not easy color fading clothes are washed at the same time. And it results in the user error interpretation, and affects the normal washing process.

US 2006/007444 A1 shows a method for detecting the presence of color in a water sample of a washing machine.

GB 2 078 946 B and KR 2005 0066439 A illustrate further methods of the mentioned type.

US 2007/299545 A1 discloses a method to control a bath liquid in a washing machine by receiving light emitted by a light source with a detector that transverses the bath liquid to register the color change.

In view of the foregoing, the present disclosure is proposed.

**SUMMARY OF THE INVENTION**

An objective of the present disclosure is to provide a washing machine having an improved reminding function for preventing clothing from fading, so as to achieve the fading detection of clothing.

To achieve the objective of the disclosure, a technical scheme is adopted as followed.

A first aspect of the invention refers to a washing machine having a reminding function for preventing clothing from fading comprising an outer drum for washing water, wherein the washing machine is further provided with:

- a color sensor for detecting the color of washing water to determine whether or not the clothing fades depending on color change of the washing water during a washing process,

- means for issuing an alarm of clothing color fading,

- a sampler arranged at a bottom of the outer drum for influent of the washing water and that communicates with the outer drum, wherein the sampler further comprises a housing defining a chamber for receiving a certain amount of washing water at regular time intervals and, wherein

- opposite side walls of the sampler are equipped with an LED light and the color sensor, respectively, both a portion of the housing corresponding to the LED light and a portion of the housing corresponding to the color sensor are transparent and made of a light-transmitting plate,
the white detection light emitted by the LED light passes through the washing water in the sampler to the color sensor, and the color sensor obtains the color of the washing water based on a received detection light color, and

- a processor is provided for comparing, at regular time intervals, measured color values detected by said color sensor with set reference values, thereby detecting the change rate of the color of the washing water based on the received detection light color.

According to the invention, a bowl-shaped reflective plate is provided around a periphery of the LED light which reflects a divergent white light emitted from the LED light as a parallel light to the color sensor, a convex lens is provided between the color sensor and the light-transmitting plate on a corresponding side, and the parallel detection light passing through the washing water is focused to the color sensor.

Below, the invention is further described in other words, also giving additional features that may be adopted in addition. A washing machine having a reminding function for preventing clothing from fading comprises an outer tub for washing water. The washing machine is provided with a color sensor for detecting color of washing water to judge whether or not the laundry is faded depending on color change of the washing water during a washing process.

Further, the washing machine is equipped with a LED light emitting a white detection light which corresponds with the color sensor. The white detection light emitted by the LED light is passed through the washing water to the color sensor, and the color sensor obtains the color of the washing water based on the received detection light color.

Further, a bottom of the outer tub is provided with a sampler which communicates with the outer tub for influent of the washing water. Both side walls of the sampler are equipped with LED lights and color sensor respectively. The white detection light emitted by the LED light is passed through the washing water in the sampler to the color sensor, and the color sensor obtains the color of the wash water based on the received detection light color.

Further, the sampler is arranged on a drain pipe or a circulation pipe of the washing machine. And the sampler is arranged upstream of a control device which controls the opening and closing of the drain pipe or the circulation pipe, and the washing water in the outer tub is controlled to flow outside the washing machine through the sampler or into the washing machine though an inlet.

Further, a connecting pipe is communicated with the outside of the washing machine through the drain pipe or communicated with the inlet of the washing machine through the circulating pipe.

Further, the sampler comprises a housing configured a chamber for receiving a certain amount washing water. An upper end of the housing is provided with a water inlet connected with the outer tub. A lower end of the housing is communicated with the drain pipe or the circulating pipe of the washing machine through the connecting pipe. The connecting pipe is provided with a control device for controlling the opening and closing of the pipeline.

Further, the LED light and the color sensor are relatively provided on left and right side walls of the housing of the sampler to detect the color of the washing water in the sampler. A portion of the housing corresponding to the LED light and a portion of the housing corresponding to the color sensor are respectively a transparent portion made of a light-transmitting plate.

Further, a bowl-shaped reflective plate is provided around a periphery of the LED light which reflects a divergent white light emitted from the LED light as a parallel light to a receiving component. A convex lens is provided between the color sensor and the light-transmitting plate on a corresponding side, and the parallel detection light passing through the washing water is focused to the color sensor.

Further, a lens hood made of an opaque material is provided around an outer periphery of the color sensor. Preferably, the lens hood and the light-transmitting plate on the corresponding side constitute an enclosed chamber for placing the receiving component. Further preferably, the housing of the sampler is made of opaque material to form a shading portion.

Further, the color sensor comprises a detection element and filters which can filter red, green and blue colors respectively, so as to obtain a value of red color R, a value of green color G, and a value of blue color B that is contained in the washing water.

Further, all the filters are provided on a side of the detection element facing the detection light. The red filter, the green filter and the blue filter are respectively provided in different areas so that the detection element can receive the detection light containing only red light, green light and blue light after filtration.

By the means of the above-described apparatus, the present disclosure employs another way to detect the clothing color fading which is different from the prior art such as in the patent application No. CN200780025027.4.

The sampler for the washing water is arranged at a bottom of the outer tub of the washing machine. A sample the washing water is taken at a time interval, and a white LED light emits light to the sampler and the color sensor receives the light through the sampler then sends the detection value to the processor of the washing machine. Comparing a detection value to a set value by a processor, the purpose of determining whether or not the color fading of the clothing occurs is achieved. Thus achieves the purpose of timely prediction of the clothing color fading and a fast, sensitive determination of the clothing color fading.

Another objective of the present disclosure is to provide an improved reminding method of a washing machine for preventing clothing from fading to fast, accurately determine whether or not the clothing color fading occurs. To achieve the purpose of the objective, a following technical scheme is adopted.

A second aspect of the invention refers to a method to run a washing machine having a reminding function for preventing clothing from fading, wherein the washing machine comprises an outer drum for washing water, wherein the washing machine is further provided with:

- a color sensor for detecting the color of washing water to determine whether or not the clothing fades depending on color change of the washing water during a washing process,

- means for issuing an alarm of clothing color fading, and

- a sampler that is arranged at a bottom of the outer drum for influent of the washing water and that communicates with the outer drum, wherein the sampler further comprises a housing defining a chamber that receives a certain amount washing at regular time intervals, wherein

- opposite walls of said sampler are provided with an LED light and the color sensor, respectively, both a portion of the housing corresponding to the LED light and a portion of the housing corresponding to the color sensor are transparent and made of a light-transmitting plate,
the white detection light emitted by the LED light passes through the washing water in the sampler to the color sensor, and the color sensor obtains the color of the washing water based on a received detection light color, and

- a processor is provided that compares, at regular time intervals, measured color values detected by said color sensor with set reference values, thereby detecting the change rate of the color of the washing water based on the received detection light color,
and when the change rate of a color value is greater than a set reference value, causes the means to issue an alarm of clothing color fading.

According to the invention, a bowl-shaped reflective plate is provided around a periphery of the LED light which reflects a divergent white detection light emitted by the LED light as a parallel light to the color sensor, and a convex lens is provided between the color sensor and the light-transmitting plate on a corresponding side, and the parallel detection light passing through the washing water is focused to the color sensor.

Below, the invention is further described in other words, also giving additional features that may be adopted in addition.

A reminding method of a washing machine for preventing clothing from fading, comprises, during a washing process of a washing machine, the washing machine detecting a color value of the washing water; when a change rate of a color value of the washing water is greater than a set value, issuing an alarm of clothing color fading.

Further, during the washing process, the color of the washing water in the outer tub of the washing machine is detected at a regular time interval t to get the color value of the washing water.

Further, during the washing process, a small amount of washing water in the outer tub of the washing machine flows out at a regular time interval t and the color of the outflowing washing water is detected to get the color value of the washing water at this time.

Further, the washing water in the sampler which is communicated with the outer tub of the washing machine is refreshed at a regular time interval t, and color of the refreshing washing water is detected by using the LED light and the color sensor which are arranged at the sampler.

Further, the control device at an out let of the sampler is open for a certain time t1 at a regular time interval t, to drain the washing water in the sampler out, and allow the washing water in the outer tub flow in through the water inlet of the sampler to refresh the washing water in the sampler.

Further, specific control steps of the washing process of the washing machine are following:

1) Comparing the color change rate of the washing water to the set value, if the change rate is smaller than the set value, running step 4), if the change rate is greater or equal to the set value, running step 2);

2) The washing machine alarming to users about clothing color fading and stopping washing, and running step 3);

3) The user determining whether or not to go on washing, if yes, running step 4), if no, running step 5);

4) The washing machine continuing proceeding the washing process; after a certain time t, running step 1) until the washing process ends, and then running step 5);

5) The washing machine proceeding draining, dewatering in turn; after the dewatering process ends, the washing machine being turned off.

Further, after the control device is closed, the LED light and the color sensor at the sampler are turned on, and the color of refreshing washing water is detected. After the detection is completed, turn off the LED light and the color sensor.

Further, the specific determination process is as followed. The LED emits white detection light to the washing water in the sampler; the detection light changes color after passing through the washing water; the color sensor receives the detection light though the washing water to determine the color of the washing water according to the color of the detection light received.

Further, the color sensor let the detection light which passes though the washing water and of which color has been changed respectively pass through red, green and blue three colors filters to get the color value of the red color R, the color value of the green color G, the color value of the blue color B that is contained in the washing water.

Further, the determination steps of the color fading of clothing are as followed,

11) Detecting the color value of the red color R, the color value of the green color G, the color value of the blue color B at a regular time interval t, and each detection value is sequentially stored as R1, R2 ... Rn and G1, G2 ... Gn and B1, B2 ... Bn (n is a positive integer greater than 1) according to the detection time order;

12) The color values $R_n$, $G_n$, and $B_n$ detected this time being correspondingly subtracted the previously detected color value values $R_{n-1}$, $G_{n-1}$ and $B_{n-1}$ to obtain $\Delta R_n = |R_n-R_{n-1}|$, $\Delta G_n = |Gn-G_{n-1}|$, $\Delta B_n=|B_n-B_{n-1}|$ ;

13) Comparing color change values $\Delta R_n$, $\Delta G_n$, $\Delta B_n$ to corresponding set values $\Delta R'$, $\Delta G'$, $\Delta B'$,
if $\Delta R_n> \Delta R'$ and/or $\Delta G_n> \Delta G'$ and/or $\Delta B_n >\Delta B'$, the washing machine issuing a fading alarm signal and stopping washing, otherwise, the washing machine normally performing the washing process.

Further, the determination steps of color fading of clothing are as followed,

21) During a water supplying process, or after the water supplying process and before the washing process, detecting the color of the washing water and getting initial color values $R_0$, $G_0$, $B_0$ of red, green and blue colors which is contained in the washing water;

22) During the washing process, respectively detecting the color value of the red color R, the color value of the green color G, the color value of the blue color B contained in the washing water at a regular time interval t;

23) The color values $R_n$, $G_n$, and $B_n$ detected this time being correspondingly subtracted the initial color values $R_0$, $G_0$, $B_0$ before washing process to obtain $\Delta R_n= |R_n-R_0|$, $\Delta G_n= | G_n-G_0|$, $\Delta B_n=|B_n-B_0|$ ;

24) Comparing color change values $\Delta R_n$, $\Delta G_n$, $\Delta B_n$ to corresponding set values $\Delta R'$, $\Delta G'$, $\Delta B'$,
if $\Delta R_n> \Delta R'$ and/or $\Delta G_n> \Delta G'$ and/or $\Delta B_n >\Delta B'$, the washing machine issuing a fading alarm signal and stopping washing, otherwise, the washing machine normally performing the washing process.

Further, when $\Delta R_n>\Delta R'$, the washing machine issuing a red alarm of clothing color fading,
when $\Delta G_n>\Delta G'$, the washing machine issuing a green alarm of clothing color fading,
when $\Delta B_n>\Delta B'$, the washing machine issuing a blue alarm of clothing color fading.

By adopting the above-described method, the present disclosure employs another way to detect the clothing color fading which is different from the prior art, such as the patent application No. CN200780025027.4.

The purpose of determining whether the laundry in the washing machine fades or not is achieved by monitoring the color of the washing water in the outer tub of the washing machine and by determining a relationship between the change rates of the color values of the washing water and the set values. Whereby, it is achieved to improve of the accuracy of the fading alarm, avoid the error determination and error alarm in the fading alarm of the washing machine.

By adopting the technical scheme described above, the present disclosure has the advantage over the prior art:

1. By detecting the color of the washing water, it is possible to determine whether or not the laundry fades according to the color change of the washing water, and to improve the sensitivity and accuracy of the determination. It also avoids the situation in which fading clothes pollutes on the washing water and then causes other washing clothes to be polluted secondary.

2. By detecting the change of the color value of the red, green and blue of the washing water separately, the color of the faded clothes can be obtained. User can fast determine the faded clothing.

3. Whether the laundry is color faded or not is determined by comparing the difference between the color detection value at present and the previous color detection value or the difference between the color detection value at present and the initial color detection value to the set value, and the accuracy of the alarm preventing clothing from fading in the washing machine is improved.

4. By providing the control device at the water outlet of the sampler so that the washing water in the sampler can be automatically controlled to refresh and ensure the accuracy of the color detection of the washing water.

5. The present disclosure has the advantages of simple structure, simple method, remarkable effect and suitable for popularization and use.

## BRIEF DESCRIPTION OF THE DRAWINGS

Fig. 1 and Fig. 2 are schematic views of a structure of a washing machine of the present disclosure;

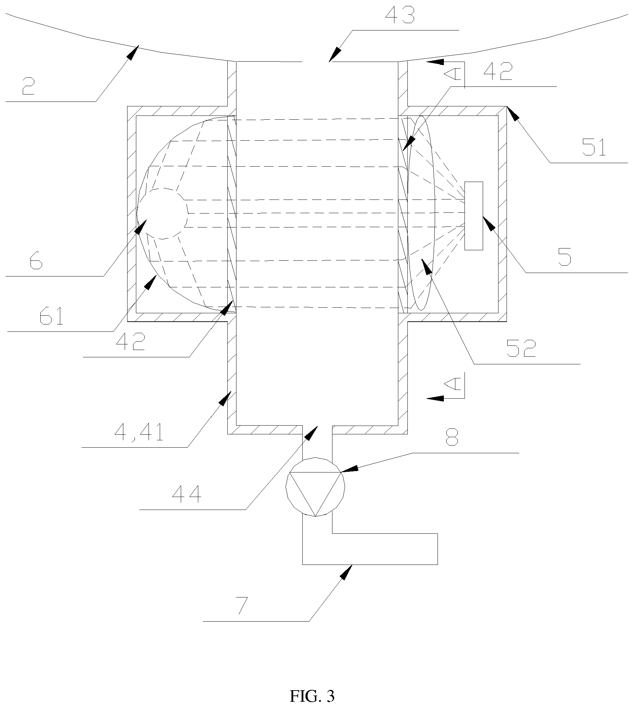

Fig. 3 is an enlarged schematic view of the sampler of Figure 2 of the present disclosure;

Fig. 4 is a schematic structural view of the cross section A-A of Fig. 3 of the present disclosure;

Fig. 5 is a flow chart of a reminding process of the clothing color fading of the present disclosure;

Fig. 6 is a flow chart of a judgment process of the clothing fading of the present disclosure;

Fig. 7 is a flow chart of a reminding process of the clothing fading of another embodiment of the present disclosure;

Fig. 8 is a flow chart of a determination process of the clothing fading of another embodiment of the present disclosure;

Fig. 9 is flow chart of a judgment process of the clothing fading of the present disclosure.

Major components description:

1 - shell, 2 - outer drum, 3 - inner drum, 4 - sampler, 5 - color sensor, 6 - LED light, 7 - connecting pipe, 8 - check valve, 9 - draining pump, 41 - housing, 42 -light-transmitting plate, 43 - water inlet, 44 - water outlet, 51 - lens hood, 52 - convex lens, 53 - red filter, 54 - green filter, 55 - blue filter, 61 - reflective plate

## DETAILED DESCRIPTION OF THE INVENTION

The following is further described in details with embodiments of the present disclosure.
A washing machine can be any existing drum washing machine or pulsator washing machine. In order to facilitate the description of the following, a drum washing machine is taken as an example. The washing machine comprises a shell 1, an outer drum 2 mounted inside the shell 1, an inner drum 3 mounted in the outer cylinder 2, the axis of the inner drum is at an acute angle or coincident with the vertical direction. A color sensor 5 which detects color of washing water is provided on the washing machine, and judges whether the laundry is fading or not according to the color change of the washing water during the washing process.

Embodiment 1

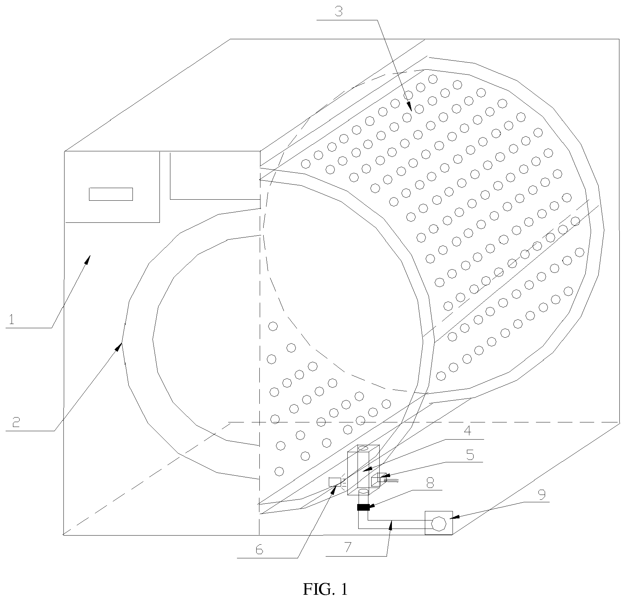

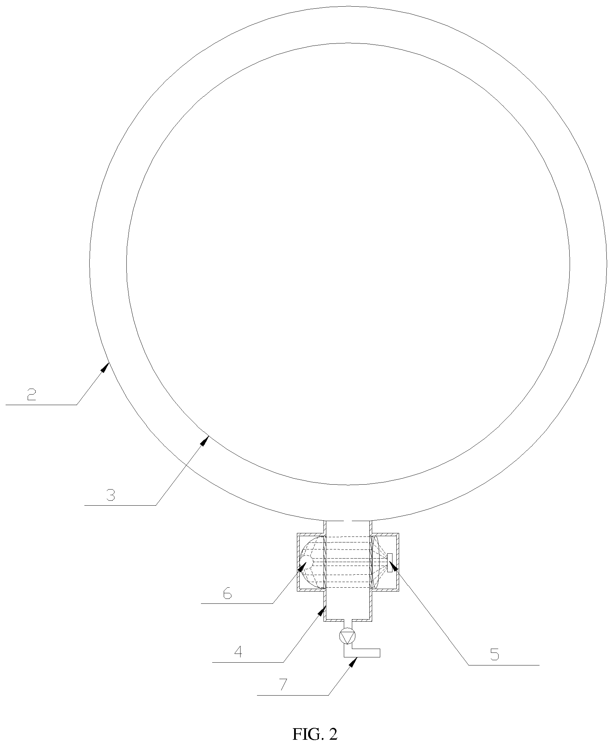

As shown from Fig.1 to Fig. 2, in the present embodiment, a sampler 4 which is communicated with an inside of the outer drum 2 and let the washing water flow in is arranged at a bottom of the outer drum 2. The sampler 4 comprises a housing 41 configured a chamber for receiving a certain amount washing water. An upper end of the housing 41 is provided with a water inlet 43 communicated with the inside of the outer drum. A lower end of the housing 41 is communicated with the drain pipe or the circulating pipe of the washing machine through the connecting pipe 7 to drain the washing water in the housing 41 out of the washing machine or re-flow into the outer drum of the washing machine. Preferably, in the present embodiment, the connecting pipe 7 is communicated with the drain pipe. One end of the connecting pipe 7 is communicated with the water outlet 44 of the sampler 4, and other end is communicated with a water outlet of the draining pump 9 which is arranged in the drain pipe. The connecting pipe 7 is provided with a control device for controlling the opening and closing of the pipeline. Preferably, in the present embodiment, the control device is constituted by a check valve 8.

In the present embodiment, left side wall and right side wall of the housing 41 of the sampler 4 are respectively arranged LED light 6 and color sensor 5 corresponding to each other. The white detection light emitted by the LED light 6 is passed through the washing water in the sampler 4 to the color sensor 5, and the color sensor 5 obtains the color of the washing water based on the received detection light color.

In the present embodiment, the housing 41 of the sampler 4 is made of opaque material to form a shading portion. A portion of the housing 41 corresponding to the LED light 6 and a portion of the housing corresponding to the color sensor 5 are respectively a transparent portion made of a light-transmitting plate 42, thus ensures the detection light received by the color sensor 5 is all emitted by the LED light 6 and passing through the washing water.

In the present embodiment, a bowl-shaped reflective plate 61 is provided around a periphery of the LED light 6, which reflects a divergent white light emitted from the LED light 6 as a parallel light to the color sensor 5. Preferably, the focus of the bowl-shaped reflective plate 61 coincides with the center of the LED light 6 to improve the intensity of the detection light and to ensure the accuracy of the inspection.

In the present embodiment, a convex lens 52 is provided between the color sensor 5 and the light-transmitting plate 42 on a corresponding side, and the parallel detection light passing through the washing water in the sampler 4 is focused to the color sensor 5 to improve the collection efficiency of the color sensor 5 for detecting light. A lens hood 51 made of an opaque material is provided around an outer periphery of the color sensor 5. Preferably, the lens hood 51 and the light-transmitting plate 42 on the corresponding side constitute an enclosed chamber for placing the color sensor 5.

Embodiment 2

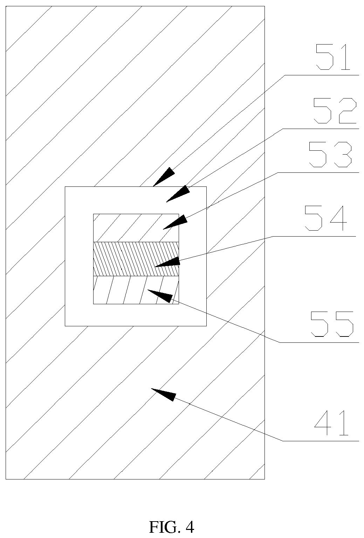

As shown in Fig. 4, in the present embodiment, the color sensor 5 comprises a detection element, and a red filter 53, a green filter 54 and a blue filter 55 for filtering three colors light of red, green and blue, so as to obtain a value of red color R, a value of green color G, a value of blue color B that are contained in the washing water

All the filters are provided at a front end of the detection light of the detection element. The red filter, the green filter and the blue filter are respectively provided in different areas so that the detection element can receive the detection light containing only red light, green light or blue light after filtration. Preferably, in the present embodiment, a red filter 53, a green filter 54, and a blue filter 55 are provided in this order from the top to the bottom at one side of the detection element. Thus, the color sensor is allowed to receive the detection light containing only red, green or blue respectively, to obtain the color value of the red color R, the color value of green color G, and the color value of blue color B contained in the washing water.

Embodiment 3

The present embodiment discloses a reminding method of a washing machine for preventing clothing from fading: detecting a color of the washing water. When a change rate of a color value of the washing water is greater than a set value, an alarm of clothing color fading is issued.

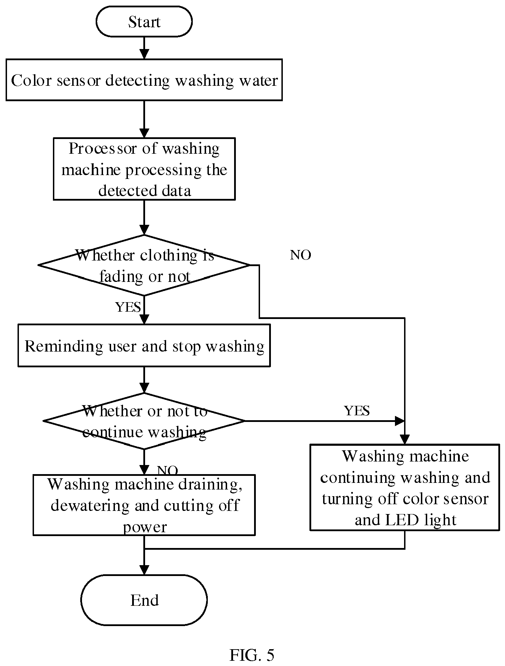

As shown in Fig. 5, specific steps of the method described above are as followed:

1) Compering the color change rate of the washing water to the set value, if the change rate is smaller than the set value, running step 4); if the change rate is greater or equal to the set value, running step 2);

2) The washing machine alarming to users about clothing color fading and stopping washing, and running step 3);

3) The user determining whether or not to go on washing, if yes, running step 4); if no, running step 5);

4) The washing machine continuing proceeding the washing process; after a certain time t, running step 1) until the washing process ends, and then running step 5);

5) The washing machine proceeding draining, dewatering in turn; after the dewatering process ends, the washing machine turning off.

In the present embodiment, during the washing process, the color of the washing water is detected at a regular time interval t to get the color value of the washing water. Preferably, the washing water in the sampler which is communicated with the outer tub of the washing machine is refreshed at a regular time interval t, and the color of the refreshing washing water is detected by using the LED light and the color sensor which are arranged at the sampler. Further preferably, the control device at an out let of the sampler is open for a certain time t1 at a regular time interval t to drain the washing water in the sampler out, and allow the washing water in the outer tub to flow in through the water inlet of the sampler, so as to refresh the washing water in the sampler.

As show in Fig. 5, in the present embodiment, after the control device is closed, the LED light and the color sensor at the sampler are turned on, and detect the color of refreshing washing water. After the detection is completed, turn off the LED light and the color sensor.

In the present embodiment, the specific determination process is as followed. The LED light emits white detection light to the washing water in the sampler, the detection light changes color after passing through the washing water, the color sensor receives the detection light though the washing water to determine the color of the washing water according to the detection light received.

Preferably, in the present embodiment, the color sensor let the detection light which passes though the washing water and of which color has been changed respectively pass through red, green and blue three colors filters to get the color value of the red color R, the color value of the green color G, the color value of the blue color B that are contained in the washing water.

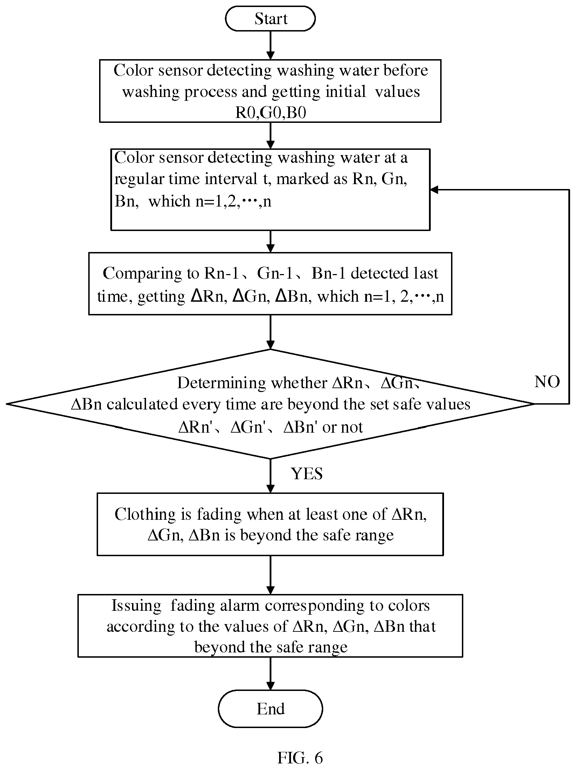

As show in Fig. 6, in the present embodiment, the determination steps of the color fading are as followed:

11) Detecting the color value of the red color R, the color value of the green color G, and the color value of the blue color B at a regular time interval t;

12) The color values $R_n$, $G_n$, and $B_n$ detected this time being correspondingly subtracted the previously detected color value values $R_{n-1}$, $G_{n-1}$ and $B_{n-1}$ to obtain $\Delta R_n = |R_n-R_{n-1}|$, $\Delta G_n = |G_n-G_{n-1}|$, $\Delta B_n = |B_n-B_{n-1}|$ ;

13) Comparing color change values $\Delta R_n$, $\Delta G_n$, $\Delta B_n$ to corresponding set values $\Delta R'$, $\Delta G'$, $\Delta B'$,
if $\Delta R_n > \Delta R'$ and/or $\Delta G_n > \Delta G'$ and/or $\Delta B_n > \Delta B'$, the washing machine issuing a fading alarm signal and stopping washing, otherwise, the washing machine normally performing the washing process.

In the present embodiment, preferably, before washing process of the washing machine, the washing water is subjected to color detection to obtain an initial value. The corresponding set values $\Delta R'$, $\Delta G'$, $\Delta B'$ are selected by the initial value to avoid the determination error of the detection result caused by the detergent color or the color of the washing water itself.

Embodiment 4

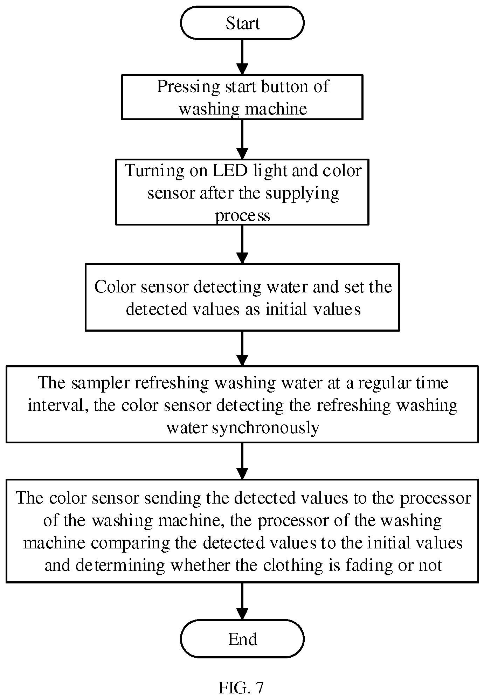

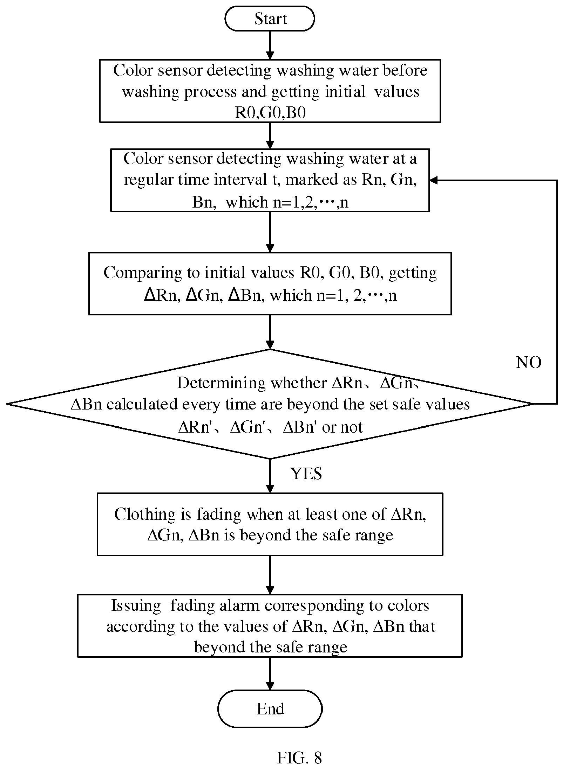

As shown in Fig. 7 and Fig. 8, in the present embodiment, the specific determination steps of color fading are as followed:

21) During a water supplying process, or after the water supplying process and before the washing process, detecting the color of the washing water and getting initial color values $R_0$, $G_0$, $B_0$ of red, green, blue colors which is contained in the washing water;

22) During the washing process, respectively detecting the color value of the red color R, the color value of the green color G, and the color value of the blue color B at a regular time interval t;

23) The color values $R_n$, $G_n$, and $B_n$ detected this same time being correspondingly subtracted the initial color values $R_0$, $G_0$, $B_0$ before washing process to obtain $\Delta R_n = |R_n-R_0|$, $\Delta G_n = |G_n-G_0|$, $\Delta B_n = |B_n-B_0|$ ;

24) Comparing color change values $\Delta R_n$, $\Delta G_n$, $\Delta B_n$ to corresponding set values $\Delta R'$, $\Delta G'$, $\Delta G'$,
if $\Delta R_n > \Delta R'$ and/or $\Delta G_n > \Delta G'$ and/or $\Delta B_n > \Delta B'$, the washing machine issuing a fading alarm signal and stopping washing, otherwise, the washing machine normally performing the washing process.

The rate of change is obtained by directly comparing the color detection value of washing water with the initial value to adapt to a washing situation of the washing machine using different color detergent and / or washing water, to avoid the occurrence of error situation in the measurement results.

In the present embodiment, when $\Delta R_n > \Delta R'$, the washing machine issues a red alarm of clothing color fading, when $\Delta G_n > \Delta G'$, the washing machine issues a green alarm of clothing color fading, when $\Delta B_n > \Delta B'$, the washing machine issues a blue alarm of clothing color fading.

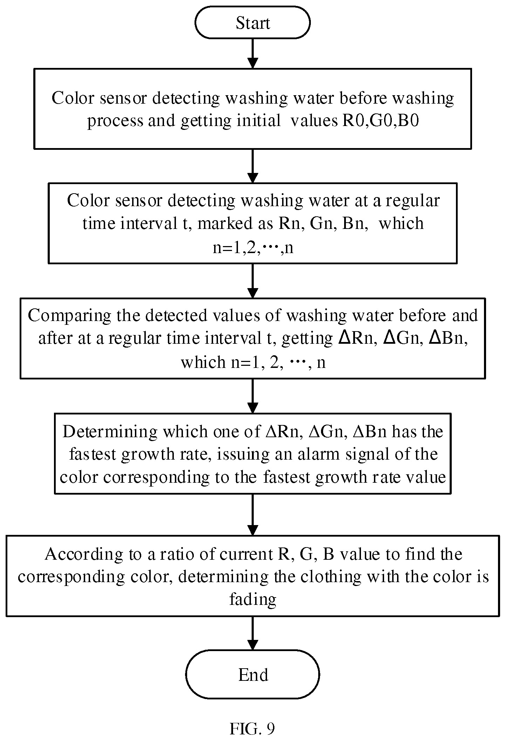

Further, as shown in Fig. 9, when at least two of the values $\Delta R_n$, $\Delta G_n$ and $\Delta B_n$ are both larger than the corresponding set values, the magnitude relationship between $\Delta R_n$, $\Delta G_n$ and $\Delta B_n$ is determined and an alarm of the color fading to which the maximum value corresponds to is issued. Or alarms of color fading to which each excess value corresponds are issued at the same time, and prompts users the alarm information of the color fading to which the maximum value corresponds.

Further preferably, when at least two of the values $\Delta R_n$, $\Delta G_n$ and $\Delta B_n$ are simultaneously larger than the corresponding set values, the relationship between $\Delta R_n$, $\Delta G_n$ and $\Delta B_n$ is calculated to obtain the color of the corresponding clothing fading and inform users.

**Claims**

1. A washing machine having a reminding function for preventing clothing from fading comprising an outer drum (2) for washing water, wherein the washing machine is further provided with:

   - a color sensor (5) for detecting the color of washing water to determine whether or not the clothing fades depending on color change of the washing water during a washing process,
   - means for issuing an alarm of clothing color fading,
   - a sampler (4) arranged at a bottom of the outer drum (2) for influent of the washing water and that communicates with the outer drum (2), wherein the sampler (4) further comprises a housing (41) defining a chamber for receiving a certain amount of washing water at regular time intervals (t) and, wherein
   - opposite side walls of the sampler (4) are equipped with an LED light (6) and the color sensor (5), respectively, both a portion of the housing (41) corresponding to the LED light (6) and a portion of the housing (41) corresponding to the color sensor (5) are transparent and made of a light-transmitting plate (42),
   the white detection light emitted by the LED light (6) passes through the washing water in the sampler (4) to the color sensor (5), and the color sensor (5) obtains the color of the washing water based on a received detection light color, and
   - a processor is provided for comparing, at regular time intervals (t), measured color values ($R_n$, $G_n$, $B_n$) detected by said color sensor (5) with set reference values, thereby detecting the change rate ($\Delta R_n$, $\Delta G_n$, $\Delta B_n$) of the color of the washing water based on the received detection light color,
   **characterized in that**,
   a bowl-shaped reflective plate (61) is provided around a periphery of the LED light (6) which reflects a divergent white light emitted from the LED light (6) as a parallel light to the color sensor (5), a convex lens (52) is provided between the color sensor (5) and the light-transmitting plate (42) on a corresponding side, and the parallel detection light passing through the washing water is focused to the color sensor (5).

2. The washing machine according to claim 1, wherein the sampler (4) is arranged in a drain pipe or a circulation pipe of the washing machine, and the sampler (4) is arranged upstream of a control device (8) which controls an opening and closing of the drain pipe or the circulation pipe, and the washing water in the outer drum (2) is controlled to flow outside the washing machine through the sampler (4) or flow into the washing machine though a water inlet (43).

3. The washing machine according to claim 1, wherein an upper end of the housing (41) is provided with a water inlet (43) connected with the outer drum (2), a lower end of the housing (41) is communicated with a drain pipe or a circulating pipe of the washing machine through a connecting pipe (7), and the connecting pipe (7) is provided with a control device (8) for controlling the opening and closing of the pipeline.

4. The washing machine according to any one of the claims 1 to 3, wherein a lens hood (51) made of an opaque material is provided around an outer periphery of the color sensor (5).

5. The washing machine according to any one of claims from 1 to 4, wherein the color sensor (5) comprises a detection element and filters (53, 54, 55) which filter red (53), green (54) and blue colors (55) respectively, so as to obtain a value of red color (R), a value of green color (G), and a value of blue color (B) that are contained in the washing water and wherein all the filters (53, 54, 55) are provided on a side of the detection element facing the detection light, the red filter (53), the green filter (54) and the blue filter (55) are respectively provided in different areas so that the detection element receives the detection light containing only red light, green light and blue light after filtration.

6. A method to run a washing machine having a reminding function for preventing clothing from fading, wherein the washing machine comprises an outer drum (2) for washing water, wherein the washing machine is further provided with:

- a color sensor (5) for detecting the color of washing water to determine whether or not the clothing fades depending on color change of the washing water during a washing process,

- means for issuing an alarm of clothing color fading, and

- a sampler (4) that is arranged at a bottom of the outer drum (2) for influent of the washing water and that communicates with the outer drum (2), wherein the sampler (4) further comprises a housing (41) defining a chamber that receives a certain amount washing at regular time intervals (t), wherein

- opposite walls of said sampler (4) are provided with an LED light (6) and the color sensor (5), respectively, both a portion of the housing (41) corresponding to the LED light (6) and a portion of the housing (41) corresponding to the color sensor (5) are transparent and made of a light-transmitting plate (42),

the white detection light emitted by the LED light (6) passes through the washing water in the sampler (4) to the color sensor (5), and the color sensor (5) obtains the color of the washing water based on a received detection light color, and

- a processor is provided that compares, at regular time intervals (t), measured color values ($R_n$, $G_n$, $B_n$) detected by said color sensor (5) with set reference values, thereby detecting the change rate ($\Delta R_n$, $\Delta G_n$, $\Delta B_n$) of the color of the washing water based on the received detection light color,

and when the change rate ($\Delta R_n$, $\Delta G_n$, $\Delta B_n$) of a color value ($R_n$, $G_n$, $B_n$) is greater than a set reference value ($\Delta R'$, $\Delta G'$, $\Delta B'$), causes the means to issue an alarm of clothing color fading,

**characterized in that**,

a bowl-shaped reflective plate (61) is provided around a periphery of the LED light (6) which reflects a divergent white detection light emitted by the LED light (6) as a parallel light to the color sensor (5), and a convex lens (52) is provided between the color sensor (5) and the light-transmitting plate (42) on a corresponding side, and the parallel detection light passing through the washing water is focused to the color sensor (5).

7. The method according to claim 6, wherein, during the washing process, the color of the washing water in the outer drum (2) of the washing machine is detected at a regular time interval (t) to get the color value ($R_n$, $G_n$, $B_n$) of the washing water;

or, during the washing process, a small amount of washing water in the outer drum (2) of the washing machine flows out at a regular time interval (t) and the color of the outflowing washing water is detected to get the color value ($R_n$, $G_n$, $B_n$) of the washing water at this time.

8. The method according to claim 7, wherein, the washing water in the sampler (4) which is communicated with the outer drum (2) of the washing machine is refreshed at a regular time interval (t), and color of a refreshing washing water is detected by using the LED light (6) and the color sensor (5) which are arranged at the sampler (4).

9. The method according to any one of claims from 6 to 8, comprising the steps of:

1) comparing the color change rate ($\Delta R_n$, $\Delta G_n$, $\Delta B_n$) of the washing water to a set value, if the change rate ($\Delta R_n$, $\Delta G_n$, $\Delta B_n$) is smaller than the set value, running step 4), if the change rate ($\Delta R_n$, $\Delta G_n$, $\Delta B_n$) is greater or equal to the set value, running step 2);

2) the washing machine alarming to users about clothing color fading and stopping washing, and running step 3);

3) the user determining whether or not to go on washing, and if yes, running step 4), or if no, running step 5);

4) the washing machine continuing proceeding the washing process; after a certain time (t), running step 1) until the washing process ends, and then running step 5);

5) the washing machine proceeding draining, dewatering in turn; after the dewatering process ends, the washing machine being turned off.

10. The method according to claim 9, wherein,

a specific determination process is as follows: the LED (6) emits white detection light to the washing water in the sampler (4); the color of the detection light is changed after passing through the washing water; the color sensor (5) receives the detection light though the washing water to determine the color of the washing water according to the color of the detection light received.

11. The method according to any one of claims from 6 to 10, comprising the steps of:

11) detecting the color value ($R_n$) of the red color (R), the color value ($G_n$) of the green color (G), the color value ($B_n$) of the blue color (B) at a regular time interval (t);

12) the color values ($R_n$), ($G_n$) and ($B_n$) detected this time being correspondingly subtracted from previously detected color value values ($R_{n-1}$, $G_{n-1}$ and $B_{n-1}$) to obtain $\Delta R_n = |R_n - R_{n-1}|$, $\Delta G_n = |G_n - G_{n-1}|$, $\Delta B_n = |B_n - B_{n-1}|$ ;

13) comparing color change values ($\Delta R_n$, $\Delta G_n$, $\Delta B_n$) to corresponding set values ($\Delta R'$, $\Delta G'$, $\Delta B'$), andl
if $\Delta R_n > \Delta R'$ and/or $\Delta G_n > \Delta G'$ and/or $\Delta B_n > \Delta B'$, the washing machine issuing a fading alarm signal and stopping washing, otherwise, the washing machine continuing performing the washing process.

**12.** The method according to any one of claims from 6 to 10, comprising the steps of:

21) during a water supplying process, or after the water supplying process and before the washing process, detecting the color of the washing water and getting initial color values ($R_0$, $G_0$, $B_0$) of red, green and blue colors (R, G, B) which are contained in the washing water;
22) during the washing process, respectively detecting the color value ($R_n$) of the red color (R), the color value ($G_n$) of the green color (G), the color value ($B_n$) of the blue color (B) contained in the washing water at a regular time interval (t);
23) the color values ($R_n$, $G_n$, and $B_n$) detected this time being correspondingly subtracted from the initial color values ($R_0$, $G_0$, $B_0$) before washing process to obtain $\Delta R_n = |R_n - R_0|$, $\Delta G_n = |G_n - G_0|$, $\Delta B_n = |B_n - B_0|$ ;
24) comparing color change values ($\Delta R_n$, $\Delta G_n$, $\Delta B_n$) to corresponding set values ($\Delta R'$, $\Delta G'$, $\Delta B'$), and
if $\Delta R_n > \Delta R'$ and/or $\Delta G_n > \Delta G'$ and/or $\Delta B_n > \Delta B'$, the washing machine issuing a fading alarm signal and stopping washing, otherwise, the washing machine continues performing the washing process.

**13.** The method according to claim 11 or 12, comprising the steps:

when $\Delta R_n > \Delta R'$, the washing machine issuing a red alarm of clothing color fading,
when $\Delta G_n > \Delta G'$, the washing machine issuing a green alarm of clothing color fading, or
when $\Delta B_n > \Delta B'$, the washing machine issuing a blue alarm of clothing color fading.

**Patentansprüche**

**1.** Waschmaschine mit einer Erinnerungsfunktion zur Verhinderung des Ausbleichens von Kleidungsstücken, umfassend eine äußere Trommel (2) für Waschwasser, wobei die Waschmaschine ferner versehen ist mit:

- einem Farbsensor (5) zur Detektion der Farbe von Waschwasser, um in Abhängigkeit von einer Farbänderung des Waschwassers während eines Waschprozesses zu bestimmen, ob die Kleidungsstücke ausbleichen oder nicht,
- Mitteln zur Ausgabe eines Alarms bei Ausbleichen der Farbe von Kleidungsstücken,
- einem Probenehmer (4), der an einer Unterseite der äußeren Trommel (2) für den Zufluss des Waschwassers angeordnet ist und der mit der äußeren Trommel (2) kommuniziert, wobei der Probenehmer (4) ferner ein Gehäuse (41) umfasst, das eine Kammer zur Aufnahme einer bestimmten Waschwassermenge in regelmäßigen Zeitabständen (t) bestimmt, und wobei
- gegenüberliegende Seitenwände des Probenehmers (4) mit einer LED-Leuchte (6) bzw. dem Farbsensor (5) ausgerüstet sind, sowohl ein Abschnitt des Gehäuses (41), der der LED-Leuchte (6) entspricht, als auch ein Abschnitt des Gehäuses (41), der dem Farbsensor (5) entspricht, durchsichtig und aus einer lichtdurchlässigen Platte (42) gefertigt sind,
das durch die LED-Leuchte (6) emittierte weiße Detektionslicht durch das Waschwasser in dem Probenehmer (4) zu dem Farbsensor (5) geht und der Farbsensor (5) die Farbe des Waschwassers auf der Grundlage einer empfangenen Detektionslichtfarbe erhält und
- ein Prozessor vorgesehen ist zum Vergleichen, in regelmäßigen Zeitabständen (t), von gemessenen Farbwerten ($R_n$, $G_n$, $B_n$), die von dem Farbsensor (5) detektiert werden, mit festgelegten Bezugswerten, wodurch die Änderungsrate ($\Delta R_n$, $\Delta G_n$, $\Delta B_n$) der Farbe des Waschwassers auf der Grundlage der empfangenen Detektionslichtfarbe detektiert wird, **dadurch gekennzeichnet, dass**
eine schalenförmige reflektierende Platte (61) um eine Peripherie der LED-Leuchte (6) herum vorgesehen ist, die ein divergentes weißes Licht, das von der LED-Leuchte (6) emittiert wird, als paralleles Licht zu dem Farbsensor (5) reflektiert, eine konvexe Linse (52) zwischen dem Farbsensor (5) und der lichtdurchlässigen Platte (42) auf einer entsprechenden Seite vorgesehen ist und das parallele Detektionslicht, das durch das Waschwasser geht, auf den Farbsensor (5) fokussiert wird.

**2.** Waschmaschine nach Anspruch 1, wobei der Probenehmer (4) in einem Abflussrohr oder einem Zirkulationsrohr der Waschmaschine angeordnet ist und der Probenehmer (4) einer Steuereinrichtung (8) vorgeschaltet ist, die ein Öffnen und Schließen des Abflussrohrs oder des Zirkulationsrohrs steuert, und das Waschwasser in der äußeren Trommel (2) dazu gesteuert wird, durch den Probenehmer (4) aus der Waschmaschine zu strömen oder durch einen Wasserzulauf (43) in die Waschmaschine zu strömen.

3. Waschmaschine nach Anspruch 1, wobei ein oberes Ende des Gehäuses (41) mit einem Wasserzulauf (43) versehen ist, der mit der äußeren Trommel (2) verbunden ist, ein unteres Ende des Gehäuses (41) durch ein Verbindungsrohr (7) mit einem Abflussrohr oder einem Zirkulationsrohr der Waschmaschine in Verbindung gebracht ist und das Verbindungsrohr (7) mit einer Steuereinrichtung (8) zur Steuerung des Öffnens und Schließens der Rohrleitung versehen ist.

4. Waschmaschine nach einem der Ansprüche 1 bis 3, wobei eine Linsenblende (51) aus einem undurchsichtigen Material um eine äußere Peripherie des Farbsensors (5) herum vorgesehen ist.

5. Waschmaschine nach einem der Ansprüche 1 bis 4, wobei der Farbsensor (5) ein Detektionselement und Filter (53, 54, 55), die jeweils rote (53), grüne (54) und blaue Farbe (55) herausfiltern, umfasst, um einen Wert der roten Farbe (R), einen Wert der grünen Farbe (G) und einen Wert der blauen Farbe (B) zu erhalten, die in dem Waschwasser enthalten sind, und wobei alle Filter (53, 54, 55) auf einer dem Detektionslicht zugewandten Seite des Detektionselementes vorgesehen sind und
das rote Filter (53), das grüne Filter (54) und das blaue Filter (55) jeweils in unterschiedlichen Bereichen vorgesehen sind, sodass das Detektionselement das Detektionslicht, das nach dem Filtern nur rotes Licht, grünes Licht und blaues Licht enthält, empfängt.

6. Verfahren zum Betreiben einer Waschmaschine mit einer Erinnerungsfunktion zur Verhinderung des Ausbleichens von Kleidungsstücken, wobei die Waschmaschine eine äußere Trommel (2) für Waschwasser umfasst, wobei die Waschmaschine ferner versehen ist mit:

- einem Farbsensor (5) zur Detektion der Farbe von Waschwasser, um in Abhängigkeit von einer Farbänderung des Waschwassers während eines Waschprozesses zu bestimmen, ob die Kleidungsstücke ausbleichen oder nicht,
- Mitteln zur Ausgabe eines Alarms bei Ausbleichen der Farbe von Kleidungsstücken und
- einem Probenehmer (4), der an einer Unterseite der äußeren Trommel (2) für den Zufluss des Waschwassers angeordnet ist und der mit der äußeren Trommel (2) kommuniziert, wobei der Probenehmer (4) ferner ein Gehäuse (41) umfasst, das eine Kammer bestimmt, die in regelmäßigen Zeitabständen (t) eine bestimmte Waschwassermenge aufnimmt, wobei
- gegenüberliegende Wände des Probenehmers (4) mit einer LED-Leuchte (6) bzw. dem Farbsensor (5) versehen sind, sowohl ein Abschnitt des Gehäuses (41), der der LED-Leuchte (6) entspricht, als auch ein Abschnitt des Gehäuses (41), der dem Farbsensor (5) entspricht, durchsichtig und aus einer lichtdurchlässigen Platte (42) gefertigt sind,
das weiße Detektionslicht, das von der LED-Leuchte (6) emittiert wird, durch das Waschwasser in dem Probenehmer (4) zu dem Farbsensor (5) geht und der Farbsensor (5) die Farbe des Waschwassers auf der Grundlage einer empfangenen Detektionslichtfarbe erhält und
- ein Prozessor vorgesehen ist, der in regelmäßigen Zeitabständen (t) gemessene Farbwerte ($R_n$, $G_n$, $B_n$), die von dem Farbsensor (5) detektiert werden, mit festgelegten Bezugswerten vergleicht, wodurch er die Änderungsrate ($\Delta R_n$, $\Delta G_n$, $\Delta B_n$) der Farbe des Waschwassers auf der Grundlage der empfangenen Detektionslichtfarbe detektiert,
und, wenn die Änderungsrate ($\Delta R_n$, $\Delta G_n$, $\Delta B_n$) eines Farbwertes ($R_n$, $G_n$, $B_n$) größer als ein festgelegter Bezugswert ($\Delta R'$, $\Delta G'$, $\Delta B'$) ist, bewirkt, dass die Mittel einen Alarm bei Ausbleichen der Farbe von Kleidungsstücken ausgeben,
**dadurch gekennzeichnet, dass**
eine schalenförmige reflektierende Platte (61) um eine Peripherie der LED-Leuchte (6) herum vorgesehen ist, die ein divergentes weißes Detektionslicht, das von der LED-Leuchte (6) emittiert wird, als paralleles Licht zu dem Farbsensor (5) reflektiert, und eine konvexe Linse (52) zwischen dem Farbsensor (5) und der lichtdurchlässigen Platte (42) auf einer entsprechenden Seite vorgesehen ist und das parallele Detektionslicht, das durch das Waschwasser geht, auf den Farbsensor (5) fokussiert wird.

7. Verfahren nach Anspruch 6, wobei während des Waschprozesses die Farbe des Waschwassers in der äußeren Trommel (2) der Waschmaschine in einem regelmäßigen Zeitabstand (t) detektiert wird, um den Farbwert ($R_n$, $G_n$, $B_n$) des Waschwassers zu erhalten; oder während des Waschprozesses eine geringe Waschwassermenge in der äußeren Trommel (2) der Waschmaschine in einem regelmäßigen Zeitabstand (t) ausströmt und die Farbe des ausströmenden Waschwassers detektiert wird, um den Farbwert ($R_n$, $G_n$, $B_n$) des Waschwassers zu diesem Zeitpunkt zu erhalten.

8. Verfahren nach Anspruch 7, wobei das Waschwasser in dem Probenehmer (4), der mit der äußeren Trommel (2) der Waschmaschine in Verbindung gebracht ist, in einem regelmäßigen Zeitabstand (t) aufgefrischt wird und die Farbe eines Auffrischwaschwassers unter Verwendung der LED-Leuchte (6) und des Farbsensors (5), die an dem Probenehmer (4) angeordnet sind, detektiert wird.

9. Verfahren nach einem der Ansprüche 6 bis 8, umfassend die folgenden Schritte:

   1) Vergleichen der Farbänderungsrate ($\Delta R_n$, $\Delta G_n$, $\Delta B_n$) des Waschwassers mit einem Sollwert, falls die Änderungsrate ($\Delta R_n$, $\Delta G_n$, $\Delta B_n$) kleiner als der Sollwert ist, Ausführen von Schritt 4), falls die Änderungsrate ($\Delta R_n$, $\Delta G_n$, $\Delta B_n$) größer als der oder gleich dem Sollwert ist, Ausführen von Schritt 2);
   2) Ausgeben, durch die Waschmaschine, eines Alarms bei Ausbleichen der Farbe von Kleidungsstücken an Benutzer und Stoppen des Waschprozesses, und Ausführen von Schritt 3);
   3) Bestimmen, durch den Benutzer, ob der Waschprozess fortgesetzt werden soll oder nicht, und falls ja, Ausführen von Schritt 4), oder falls nein, Ausführen von Schritt 5);
   4) Fortsetzen des Waschprozesses durch die Waschmaschine; nach einer bestimmten Zeit (t), Ausführen von Schritt 1), bis der Waschprozess endet, und dann Ausführen von Schritt 5);
   5) durch die Waschmaschine, Ableiten des Wassers und dann Entwässern; Ausschalten der Waschmaschine nach Ende des Entwässerungsprozesses.

10. Verfahren nach Anspruch 9, wobei
    ein spezifischer Bestimmungsprozess folgendermaßen abläuft: die LED (6) emittiert weißes Detektionslicht zu dem Waschwasser in dem Probenehmer (4); die Farbe des Detektionslichtes ist nach dem Durchgang durch das Waschwasser verändert; der Farbsensor (5) empfängt das Detektionslicht durch das Waschwasser, um die Farbe des Waschwassers gemäß der Farbe des empfangenen Detektionslichtes zu bestimmen.

11. Verfahren nach einem der Ansprüche 6 bis 10, umfassend die folgenden Schritte:

    11) Detektieren des Farbwertes ($R_n$) der roten Farbe (R), des Farbwertes ($G_n$) der grünen Farbe (G), des Farbwertes ($B_n$) der blauen Farbe (B) in einem regelmäßigen Zeitabstand (t);
    12) entsprechendes Subtrahieren der zu diesem Zeitpunkt detektierten Farbwerte ($R_n$), ($G_n$) und ($B_n$) von zuvor detektierten Farbwerten ($R_{n-1}$, $G_{n-1}$ und $B_{n-1}$),
    um $\Delta R_n = |R_n - R_{n-1}|$, $\Delta G_n = |G_n - G_{n-1}|$, $\Delta B_n = |B_n - B_{n-1}|$ zu erhalten;
    13) Vergleichen von Farbänderungswerten ($\Delta R_n$, $\Delta G_n$, $\Delta B_n$) mit entsprechenden Sollwerten ($\Delta R'$, $\Delta G'$, $\Delta B'$) und falls $\Delta R_n > \Delta R'$ und/oder $\Delta G_n > \Delta G'$ und/oder $\Delta B_n > \Delta B'$, Ausgeben, durch die Waschmaschine, eines Ausbleichalarmsignals und Stoppen des Waschprozesses, anderenfalls Fortsetzen der Ausführung des Waschprozesses durch die Waschmaschine.

12. Verfahren nach einem der Ansprüche 6 bis 10, umfassend die folgenden Schritte:

    21) Detektieren der Farbe des Waschwassers und Erhalten von Anfangsfarbwerten ($R_0$, $G_0$, $B_0$) der roten, grünen und blauen Farbe (R, G, B), die in dem Waschwasser enthalten sind, während eines Wasserzufuhrprozesses oder nach dem Wasserzufuhrprozess und vor dem Waschprozess;
    22) jeweiliges Detektieren des Farbwertes ($R_n$) der roten Farbe (R), des Farbwertes ($G_n$) der grünen Farbe (G), des Farbwertes ($B_n$) der blauen Farbe (B), die in dem Waschwasser enthalten sind, in einem regelmäßigen Zeitabstand (t) während des Waschprozesses;
    23) entsprechendes Subtrahieren der zu diesem Zeitpunkt detektierten Farbwerte ($R_n$, $G_n$ und $B_n$) von den Anfangsfarbwerten ($R_0$, $G_0$, $B_0$) vor dem Waschprozess,
    um $\Delta R_n = |R_n - R_0|$, $\Delta G_n = |G_n - G_0|$, $\Delta B_n = |B_n - B_0|$ zu erhalten;
    24) Vergleichen von Farbänderungswerten ($\Delta R_n$, $\Delta G_n$, $\Delta B_n$) mit entsprechenden Sollwerten ($\Delta R'$, $\Delta G'$, $\Delta B'$) und falls $\Delta R_n > \Delta R'$ und/oder $\Delta G_n > \Delta G'$ und/oder $\Delta B_n > \Delta B'$, Ausgeben, durch die Waschmaschine, eines Ausbleichalarmsignals und Stoppen des Waschprozesses, anderenfalls Fortsetzen der Ausführung des Waschprozesses durch die Waschmaschine.

13. Verfahren nach Anspruch 11 oder 12, umfassend die folgenden Schritte:

wenn $\Delta R_n > \Delta R'$, Ausgeben, durch die Waschmaschine, eines roten Alarms bei Ausbleichen der Farbe von Kleidungsstücken,

wenn $\Delta G_n > \Delta G'$, Ausgeben, durch die Waschmaschine, eines grünen Alarms bei Ausbleichen der Farbe von Kleidungsstücken oder

wenn $\Delta B_n > \Delta B'$, Ausgeben, durch die Waschmaschine, eines blauen Alarms bei Ausbleichen der Farbe von Kleidungsstücken.

**Revendications**

1. Machine à laver ayant une fonction de rappel pour empêcher les vêtements de se décolorer, comprenant un tambour extérieur (2) pour l'eau de lavage, la machine à laver étant en outre fournie avec :

- un capteur de couleur (5) pour détecter la couleur de l'eau de lavage afin de déterminer si les vêtements se décolorent ou non en fonction d'une variation de couleur de l'eau de lavage au cours d'un processus de lavage,
- un moyen d'émission d'une alarme de décoloration de vêtements,
- un échantillonneur (4) agencé au niveau d'un fond du tambour extérieur (2) pour l'affluent de l'eau de lavage et qui communique avec le tambour extérieur (2), l'échantillonneur (4) comprenant en outre un boîtier (41) définissant une chambre de réception d'une certaine quantité d'eau de lavage à intervalles de temps réguliers (t) et, où
- des parois latérales opposées de l'échantillonneur (4) sont équipées d'une lumière à diode électroluminescente (6) et du capteur de couleur (5), respectivement,
et une partie du boîtier (41) correspondant à la lumière à diode électroluminescente (6) et une partie du boîtier (41) correspondant au capteur de couleur (5) sont toutes deux transparentes et composées d'une plaque de transmission de lumière (42),
la lumière de détection blanche émise par la lumière à diode électroluminescente (6) passe à travers l'eau de lavage dans l'échantillonneur (4) vers le capteur de couleur (5), et le capteur de couleur (5) obtient la couleur de l'eau de lavage sur la base d'une couleur de lumière de détection reçue, et
- un processeur est fourni pour comparer, à intervalles de temps réguliers (t), des valeurs de couleur mesurées $(R_n, G_n, B_n)$ détectées par ledit capteur de couleur (5) à des valeurs de référence définies, détectant ainsi le taux de variation $(\Delta R_n, \Delta G_n, \Delta B_n)$ de la couleur de l'eau de lavage sur la base de la couleur de lumière de détection reçue,
**caractérisée en ce que**
une plaque réfléchissante en forme de bol (61) est fournie autour d'une périphérie de la lumière à diode électroluminescente (6) qui réfléchit une lumière blanche divergente émise à partir de la lumière à diode électroluminescente (6) sous la forme d'une lumière parallèle vers le capteur de couleur (5), une lentille convexe (52) est fournie entre le capteur de couleur (5) et la plaque de transmission de lumière (42) sur un côté correspondant, et la lumière de détection parallèle passant à travers l'eau de lavage est focalisée vers le capteur de couleur (5).

2. Machine à laver selon la revendication 1, où l'échantillonneur (4) est agencé dans un tuyau d'évacuation ou un tuyau de circulation de la machine à laver, et l'échantillonneur (4) est agencé en amont d'un dispositif de commande (8) qui commande une ouverture et une fermeture du tuyau d'évacuation ou du tuyau de circulation, et l'eau de lavage dans le tambour extérieur (2) est commandée pour s'écouler à l'extérieur de la machine à laver à travers l'échantillonneur (4) ou s'écouler dans la machine à laver à travers une arrivée d'eau (43).

3. Machine à laver selon la revendication 1, où une extrémité supérieure du boîtier (41) est fournie avec une arrivée d'eau (43) reliée au tambour extérieur (2), une extrémité inférieure du boîtier (41) communique avec un tuyau d'évacuation ou un tuyau de circulation de la machine à laver à travers un tuyau de liaison (7), et le tuyau de liaison (7) est fourni avec un dispositif de commande (8) pour commander l'ouverture et la fermeture des conduites.

4. Machine à laver selon une quelconque des revendications 1 à 3, un capuchon de lentille (51) composé d'un matériau opaque étant fourni autour d'une périphérie extérieure du capteur de couleur (5).

5. Machine à laver selon une quelconque des revendications 1 à 4, où le capteur de couleur (5) comprend un élément de détection et des filtres (53, 54, 55) qui filtrent des couleurs rouge (53), verte (54) et bleue (55) respectivement, de manière à obtenir une valeur de couleur rouge (R), une valeur de couleur verte (G), et une valeur de couleur bleue (B) qui sont contenues dans l'eau de lavage et où tous les filtres (53, 54, 55) sont fournis sur un côté de l'élément de détection en face de la lumière de détection, et

le filtre rouge (53), le filtre vert (54) et le filtre bleu (55) sont respectivement fournis dans des zones différentes de sorte que l'élément de détection reçoit la lumière de détection contenant uniquement la lumière rouge, la lumière verte et la lumière bleue après filtration.

6. Procédé pour faire fonctionner une machine à laver ayant une fonction de rappel pour empêcher les vêtements de se décolorer, la machine à laver comprenant un tambour extérieur (2) pour l'eau de lavage, la machine à laver étant en outre fournie avec :

- un capteur de couleur (5) pour détecter la couleur de l'eau de lavage afin de déterminer si les vêtements se décolorent ou non en fonction d'une variation de couleur de l'eau de lavage au cours d'un processus de lavage,
- un moyen d'émission d'une alarme de décoloration de vêtements, et
- un échantillonneur (4) qui est agencé au niveau d'un fond du tambour extérieur (2) pour l'affluent de l'eau de lavage et qui communique avec le tambour extérieur (2), l'échantillonneur (4) comprenant en outre un boîtier (41) définissant une chambre qui reçoit une certaine quantité d'eau de lavage à intervalles de temps réguliers (t), où
- des parois opposées dudit échantillonneur (4) sont équipées d'une lumière à diode électroluminescente (6) et du capteur de couleur (5), respectivement, et une partie du boîtier (41) correspondant à la lumière à diode électroluminescente (6) et une partie du boîtier (41) correspondant au capteur de couleur (5) sont toutes deux transparentes et composées d'une plaque de transmission de lumière (42),
la lumière de détection blanche émise par la lumière à diode électroluminescente (6) passe à travers l'eau de lavage dans l'échantillonneur (4) vers le capteur de couleur (5), et le capteur de couleur (5) obtient la couleur de l'eau de lavage sur la base d'une couleur de lumière de détection reçue, et
- un processeur est fourni qui compare, à intervalles de temps réguliers (t), des valeurs de couleur mesurées ($R_n$, $G_n$, $B_n$,) détectées par ledit capteur de couleur (5) à des valeurs de référence définies, détectant ainsi le taux de variation ($\Delta R_n$, $\Delta G_n$, $\Delta B_n$) de la couleur de l'eau de lavage sur la base de la couleur de lumière de détection reçue,
et lorsque le taux de variation ($\Delta R_n$, $\Delta G_n$, $\Delta B_n$) d'une valeur de couleur ($R_n$, $G_n$, $B_n$) est supérieur à une valeur de référence définie ($\Delta R'$, $\Delta G'$, $\Delta B'$), amène le moyen à émettre une alarme de décoloration de vêtements, **caractérisé en ce que**
une plaque réfléchissante en forme de bol (61) est fournie autour d'une périphérie de la lumière à diode électroluminescente (6) qui réfléchit une lumière de détection blanche divergente émise par la lumière à diode électroluminescente (6) sous la forme d'une lumière parallèle vers le capteur de couleur (5), et une lentille convexe (52) est fournie entre le capteur de couleur (5) et la plaque de transmission de lumière (42) sur un côté correspondant, et la lumière de détection parallèle passant à travers l'eau de lavage est focalisée vers le capteur de couleur (5).

7. Procédé selon la revendication 6, où, au cours du processus de lavage, la couleur de l'eau de lavage dans le tambour extérieur (2) de la machine à laver est détectée à intervalles de temps réguliers (t) pour obtenir la valeur de couleur ($R_n$, $G_n$, $B_n$) de l'eau de lavage ;
ou, au cours du processus de lavage, une petite quantité d'eau de lavage dans le tambour extérieur (2) de la machine à laver s'écoule à intervalles de temps réguliers (t) et la couleur de l'écoulement de l'eau de lavage est détectée pour obtenir la valeur de couleur ($R_n$, $G_n$, $B_n$) de l'eau de lavage à ce moment-là.

8. Procédé selon la revendication 7,
l'eau de lavage dans l'échantillonneur (4) qui communique avec le tambour extérieur (2) de la machine à laver étant rafraîchie à intervalles de temps réguliers (t), et la couleur d'un rafraîchissement de l'eau de lavage étant détectée en utilisant la lumière à diode électroluminescente (6) et le capteur de couleur (5) qui sont agencés au niveau de l'échantillonneur (4).

9. Procédé selon une quelconque des revendications 6 à 8, comprenant les étapes suivantes :

1) la comparaison du taux de variation de couleur ($\Delta R_n$, $\Delta G_n$, $\Delta B_n$) de l'eau de lavage à une valeur définie, si le taux de variation ($\Delta R_n$, $\Delta G_n$, $\Delta B_n$) est inférieur à la valeur définie, passer à l'étape 4), si le taux de variation ($\Delta R_n$, $\Delta G_n$, $\Delta B_n$) est supérieur ou égal à la valeur définie, passer à l'étape 2) ;
2) la machine à laver alarmant des utilisateurs sur la décoloration de vêtements et arrêtant le lavage, et passer à l'étape 3) ;
3) l'utilisateur déterminant s'il faut ou non continuer le lavage et, si oui, passer à l'étape 4), ou si non, passer à l'étape 5) ;

4) la machine à laver continuant la réalisation du processus de lavage ; après un certain temps (t), passer à l'étape 1) jusqu'à ce que le processus de lavage se termine, puis passer à l'étape 5) ;

5) la machine à laver réalisant l'évacuation d'eau et l'essorage l'un après l'autre ; une fois que le processus d'essorage est terminé, la machine à laver s'éteint.

**10.** Procédé selon la revendication 9, un processus de détermination spécifique étant le suivant :

la diode électroluminescente (6) émet une lumière de détection blanche vers l'eau de lavage dans l'échantillonneur (4) ; la couleur de la lumière de détection change après son passage à travers l'eau de lavage ; le capteur de couleur (5) reçoit la lumière de détection à travers l'eau de lavage pour déterminer la couleur de l'eau de lavage selon la couleur de la lumière de détection reçue.

**11.** Procédé selon une quelconque des revendications 6 à 10, comprenant les étapes suivantes :

11) la détection à intervalles de temps réguliers (t) de la valeur de couleur ($R_n$) de la couleur rouge (R), de la valeur de couleur ($G_n$) de la couleur verte (G), de la valeur de couleur ($B_n$) de la couleur bleue (B) ;

12) les valeurs de couleur ($R_n$), ($G_n$) et ($B_n$) détectées à ce moment-là étant soustraites de manière correspondante des valeurs de couleur détectées précédemment ($R_{n-1}$, $G_{n-1}$ et $B_{n-1}$) pour obtenir $\Delta R_n = |R_n - R_{n-1}|$, $\Delta G_n = |G_n - G_{n-1}|$, $\Delta B_n = |B_n - B_{n-1}|$ ;

13) la comparaison des valeurs de couleur modifiées ($\Delta R_n$, $\Delta G_n$, $\Delta B_n$) à des valeurs définies correspondantes ($\Delta R'$, $\Delta G'$, $\Delta B'$), et

si $\Delta R_n > \Delta R'$ et/ou $\Delta G_n > \Delta G'$ et/ou $\Delta B_n > \Delta B'$, la machine à laver émettant un signal d'alarme de décoloration et arrêtant le lavage, sinon, la machine à laver continuant à réaliser le processus de lavage.

**12.** Procédé selon une quelconque des revendications 6 à 10, comprenant les étapes suivantes :

21) au cours d'un processus d'alimentation en eau, ou après le processus d'alimentation en eau et avant le processus de lavage, la détection de la couleur de l'eau de lavage et l'obtention de valeurs de couleur initiales ($R_0$, $G_0$, $B_0$) des couleurs rouge, verte et bleue (R, G, B) qui sont contenues dans l'eau de lavage ;

22) au cours du processus de lavage, respectivement la détection à intervalles de temps réguliers (t) de la valeur de couleur ($R_n$) de la couleur rouge (R), de la valeur de couleur ($G_n$) de la couleur verte (G), de la valeur de couleur ($B_n$) de la couleur bleue (B) contenues dans l'eau de lavage ;

23) les valeurs de couleur ($R_n$, $G_n$, et $B_n$) détectées à ce moment-là étant soustraites de manière correspondante des valeurs de couleur initiales ($R_0$, $G_0$, $B_0$) avant le processus de lavage pour obtenir

$$\Delta R_n = |R_n - R_0|, \; \Delta G_n = |G_n - G_0|, \; \Delta B_n = |B_n - B_0| \; ;$$

24) la comparaison des valeurs de couleur modifiées ($\Delta R_n$, $\Delta G_n$, $\Delta B_n$) à des valeurs définies correspondantes ($\Delta R'$, $\Delta G'$, $\Delta B'$), et

si $\Delta R_n > \Delta R'$ et/ou $\Delta G_n > \Delta G'$ et/ou $\Delta B_n > \Delta B'$, la machine à laver émettant un signal d'alarme de décoloration et arrêtant le lavage, sinon, la machine à laver continue à réaliser le processus de lavage.

**13.** Procédé selon la revendication 11 ou 12, comprenant les étapes :

lorsque $\Delta R_n > \Delta R'$, la machine à laver émet une alarme rouge de décoloration de vêtements,

lorsque $\Delta G_n > \Delta G'$, la machine à laver émet une alarme verte de de décoloration de vêtements, ou

lorsque $\Delta B_n > \Delta B'$, la machine à laver émet une alarme bleue de décoloration de vêtements.

FIG. 1

FIG. 2

43

42

51

2

5

6

61

42

52

4,41

8

44

7

FIG. 3

FIG. 4

```
                        ┌──────────────┐
                        │    Start     │
                        └──────┬───────┘
                               │
                               ▼
          ┌────────────────────────────────────────┐
          │   Color sensor detecting washing water  │
          └────────────────────┬───────────────────┘
                               │
                               ▼
              ┌───────────────────────────────┐
              │   Processor of washing          │
              │   machine processing the        │
              │   detected data                 │
              └───────────────┬───────────────┘
                               │
                               ▼
                  ◇ Whether clothing is ◇        NO
                  ◇  fading or not     ◇ ──────────┐
                               │                    │
                          YES  │                    │
                               ▼                    │
              ┌───────────────────────────────┐     │
              │   Reminding user and stop washing    │
              └───────────────┬───────────────┘     │
                               │                    │
                               ▼                    │
                  ◇ Whether or not to ◇    YES       │
                  ◇ continue washing  ◇ ─────────┐   │
                               │                 │   │
                          NO   │                 ▼   ▼
              ┌──────────────────────────┐  ┌──────────────────────┐
              │ Washing machine draining, │  │  Washing machine      │
              │ dewatering and cutting off│  │  continuing washing and│
              │ power                     │  │  turning off color sensor│
              └───────────────┬──────────┘  │  and LED light         │
                               │            └───────────┬──────────┘
                               │                        │
                               ▼◄───────────────────────┘
                        ┌──────────────┐
                        │     End      │
                        └──────────────┘
```

FIG. 5

FIG. 6

```
                    ┌──────────────┐
                    │    Start     │
                    └──────────────┘
                           │
                           ▼
              ┌─────────────────────────┐
              │  Pressing start button of │
              │     washing machine       │
              └─────────────────────────┘
                           │
                           ▼
              ┌─────────────────────────┐
              │ Turning on LED light and color │
              │  sensor after the supplying    │
              │         process                │
              └─────────────────────────┘
                           │
                           ▼
            ┌───────────────────────────────┐
            │ Color sensor detecting water and set the │
            │   detected values as initial values      │
            └───────────────────────────────┘
                           │
                           ▼
      ┌─────────────────────────────────────────┐
      │ The sampler refreshing washing water at a regular time │
      │ interval, the color sensor detecting the refreshing washing │
      │              water synchronously              │
      └─────────────────────────────────────────┘
                           │
                           ▼
   ┌────────────────────────────────────────────┐
   │ The color sensor sending the detected values to the processor │
   │   of the washing machine, the processor of the washing        │
   │ machine comparing the detected values to the initial values   │
   │  and determining whether the clothing is fading or not        │
   └────────────────────────────────────────────┘
                           │
                           ▼
                    ┌──────────────┐
                    │     End      │
                    └──────────────┘
```

FIG. 7

```
                        ┌──────────┐
                        │  Start   │
                        └────┬─────┘
                             │
                             ▼
          ┌──────────────────────────────────────────┐
          │  Color sensor detecting washing water     │
          │  before washing process and getting       │
          │  initial values R0,G0,B0                  │
          └──────────────────┬───────────────────────┘
                             │
                             ▼
          ┌──────────────────────────────────────────┐
          │  Color sensor detecting washing water at  │◄────┐
          │  a regular time interval t, marked as     │     │
          │  Rn, Gn, Bn, which n=1,2,···,n            │     │
          └──────────────────┬───────────────────────┘     │
                             │                              │
                             ▼                              │
          ┌──────────────────────────────────────────┐     │
          │  Comparing to initial values R0, G0, B0,  │     │
          │  getting ΔRn, ΔGn, ΔBn, which n=1, 2,···,n│     │
          └──────────────────┬───────────────────────┘     │
                             │                              │
                             ▼                    NO        │
                    ╱──────────────────╲───────────────────┘
            Determining whether ΔRn、ΔGn、
            ΔBn calculated every time are beyond the set safe values
                    ╲  ΔRn'、ΔGn'、ΔBn' or not  ╱
                             │ YES
                             ▼
          ┌──────────────────────────────────────────┐
          │  Clothing is fading when at least one of  │
          │  ΔRn, ΔGn, ΔBn is beyond the safe range   │
          └──────────────────┬───────────────────────┘
                             │
                             ▼
          ┌──────────────────────────────────────────┐
          │  Issuing fading alarm corresponding to    │
          │  colors according to the values of ΔRn,   │
          │  ΔGn, ΔBn that beyond the safe range      │
          └──────────────────┬───────────────────────┘
                             │
                             ▼
                        ┌──────────┐
                        │   End    │
                        └──────────┘
```

FIG. 8

Start

Color sensor detecting washing water before washing process and getting initial values R0,G0,B0

Color sensor detecting washing water at a regular time interval t, marked as Rn, Gn, Bn, which n=1,2,···,n

Comparing the detected values of washing water before and after at a regular time interval t, getting ΔRn, ΔGn, ΔBn, which n=1, 2, ···, n

Determining which one of ΔRn, ΔGn, ΔBn has the fastest growth rate, issuing an alarm signal of the color corresponding to the fastest growth rate value

According to a ratio of current R, G, B value to find the corresponding color, determining the clothing with the color is fading

End

FIG. 9

**EP 3 187 644 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200780025027
- US 2006007444 A1
- GB 2078946 B
- KR 20050066439 A
- US 2007299545 A1